# EUROPEAN PATENT APPLICATION

(11) **EP 4 691 649 A1**
(43) Date of publication of application: **11.02.2026**
(21) Application number: 24780422.2
(22) Date of filing: 27.03.2024
(51) Int. Cl.: B05C 5/02, B05C 11/10

(54) **COATING DEVICE**

(30) Priority: 30.03.2023 JP 2023054455; 25.03.2024 JP 2024048082
(71) Applicant: Toray Engineering Co., Ltd., Tokyo 103-0028 (JP)
(72) Inventor: WATANABE, Atsushi, Otsu-shi, Shiga 520-2141 (JP); KIDA, Takeshi, Otsu-shi, Shiga 520-2141 (JP)
(74) Representative: Global IP Europe Patentanwaltskanzlei
(86) International application number: PCT/JP2024/012196
(87) International publication number: WO 2024/204316

(57) **Abstract**

To provide a coating device that can suppress dragging of a coating liquid at a coating end portion. Specifically, provided is a coating device that applies a coating liquid to a substrate being conveyed, the device comprising a coating unit in which is formed a discharge port that is long in a width direction perpendicular to a transport direction of the substrate and a coating flow path that is connected to the discharge port and supplies a coating liquid to the discharge port, and a volume adjustment mechanism that changes the volume of the coating flow path, wherein the volume adjustment mechanism includes a volume adjustment part that is inserted into the coating flow path, and a drive unit that adjusts the insertion amount of the volume adjustment part.

## Description

### [TECHNICAL FIELD]

The present invention generally relates to a coating device that applies a coating liquid on a substrate to form a coating film.

### [BACKGROUND ART]

In lithium ion batteries, a slurry of electrode material is applied to a sheet-like substrate such as aluminum foil or copper foil that is conveyed in a roll-to-roll process to form a coating film, and the coating film that has been formed is dried to form a positive or negative electrode.

Then, in a step for applying a coating liquid onto a substrate being conveyed, the coating liquid is intermittently applied in order to increase the speed for improving productivity and to reduce loss of the coating liquid. That is, application of coating liquid on the substrate being conveyed in a roll-to-roll process, and interruption of the application, are repeated so that the coating film is continuously formed on the substrate with set intervals between each coating film in the transport direction of the substrate.

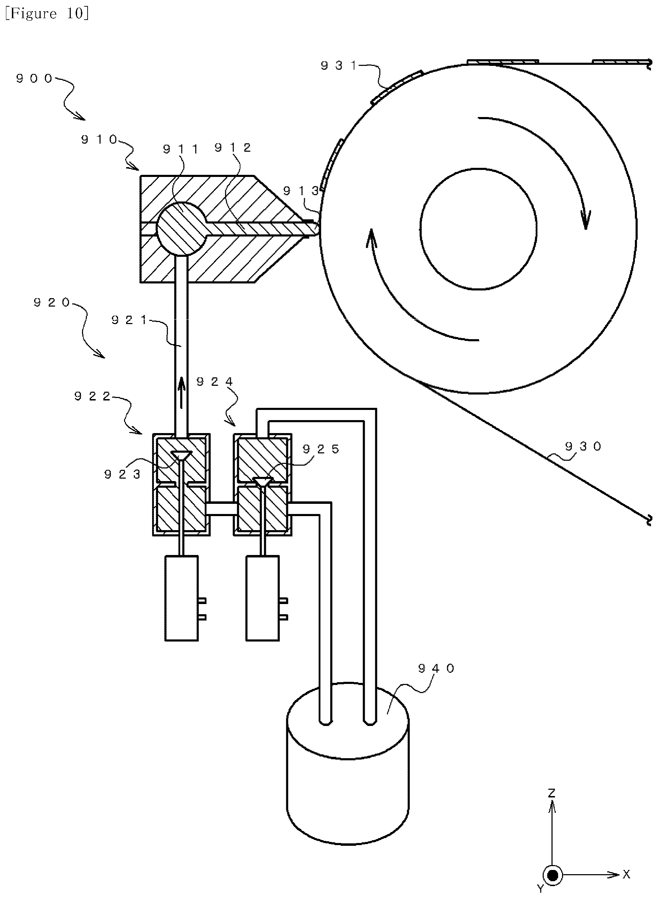

The following Patent Literature 1 discloses a coating device that intermittently applies a coating liquid. As shown in Figure 10, the coating device comprises a coating unit 910 that applies the coating liquid and a supply mechanism 920 that supplies the coating liquid to the coating unit 910. The coating liquid supplied from the supply mechanism 920 to the coating unit 910 passes through a slit 912 and a manifold 911 formed inside the coating unit 910 and is discharged from a discharge port 913 facing a substrate 930.

In addition, as shown in Figure 10, the supply mechanism 920 includes a supply path 921 that connects a tank 940 that stores the coating liquid and the coating unit 910, and a supply valve 922 provided in the middle of the supply path 921. As the position of a valve body 923 provided inside the supply valve 922 changes as a result of being driven by a motor, the state switches between two states: an open state in which a flow path for the coating liquid is formed and a closed state in which the flow path for the coating liquid is blocked. Here, in the coating device 900, when the supply valve 922 is switched to the open state, the coating liquid is discharged from the discharge port 913 of the coating unit 910 and application of the coating liquid is started, and when the supply valve 922 is switched to the closed state, the supply of the coating liquid to the coating unit 910 is interrupted and the application of the coating liquid stops. That is, the coating device 900 repeatedly changes the position of the valve body 923 to switch between the open state and the closed state of the supply valve 922, thereby intermittently applying the coating liquid to the substrate.

In addition, as shown in Figure 10, a recovery valve 924 is provided in the middle of the supply path 921 upstream of the supply valve 922, and as the position of a valve body 925 provided inside the recovery valve 924 changes as a result of being driven by a motor, the state of the recovery valve 924 is switched between an open state and a closed state. Here, the coating device 900 switches the supply valve 922 to the closed state and the recovery valve 924 to the open state to interrupt the application of the coating liquid and recover the coating liquid in the tank 940, and then switches the supply valve 922 to the open state and the recovery valve 924 to the closed state to apply the coating liquid.

### [PRIOR ART DOCUMENT]

### [PATENT LITERATURE]

[Patent Literature 1] Japanese Laid Open Patent Application Publication No. 2014-188449

### [SUMMARY OF THE INVENTION]

### [PROBLEM TO BE SOLVED BY THE INVENTION]

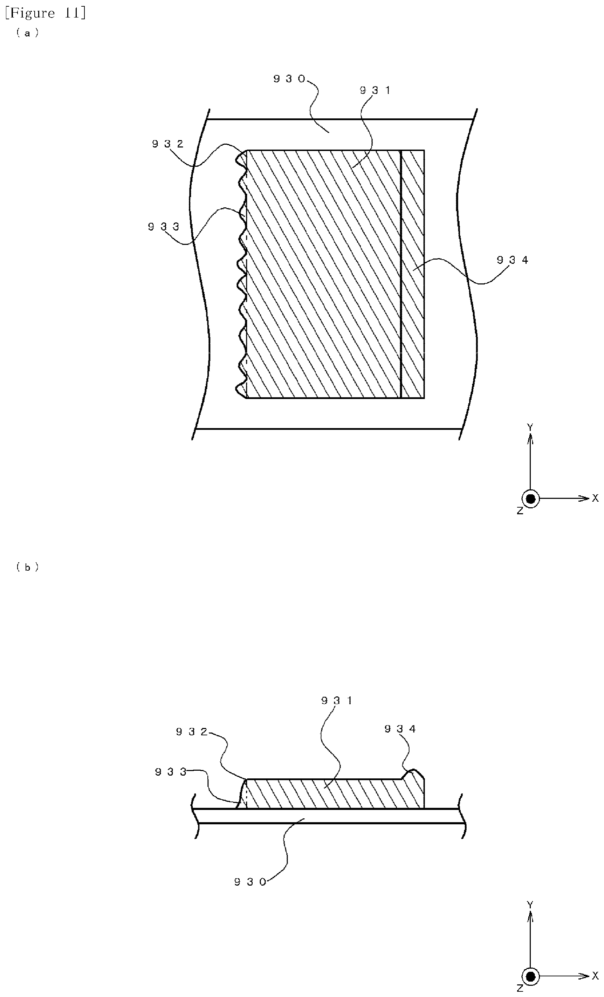

However, in the coating device 900 described above, there is the problem that dragging of the coating liquid occurs at the coating end portion. Specifically, in the coating device 900 described above, when switching the supply valve 922 to the closed state and interrupting the application of the coating liquid by the coating unit 910, the position of the valve body 923 is changed toward the upstream side of the supply path 921 to reduce the pressure inside the coating unit 910, thereby drawing the coating liquid from the discharge port 913 toward the supply path 921, and carrying out liquid cutoff at the discharge port 913. In this manner, in the coating device 900 described above, the pressure inside the coating unit 910 is reduced by operating the valve body 923 of the supply valve 922 provided at a position away from the discharge port 913, making it difficult for the effect thereof of reach the discharge port 913. Therefore, there are cases in which liquid cutoff cannot be sufficiently carried out at the discharge port 913, generating dragging 933 of the coating liquid at a coating end portion 932, which is the terminal end of the coating film 931, as shown in Figure 11(a).

The present invention was made in light of the above-described problem, an object of the present invention being to provide a coating device that can suppress dragging of the coating liquid at the coating end portion.

### [MEANS TO SOLVE THE PROBLEM]

In order to solve the problem described above, a coating device according to the present invention is a coating device that applies a coating liquid to a substrate being conveyed, the device comprising a coating unit in which is formed a discharge port that is long in a width direction perpendicular to a transport direction of the substrate and a coating flow path that is connected to the discharge port and supplies a coating liquid to the discharge port, and a volume adjustment mechanism that changes the volume of the coating flow path, wherein the volume adjustment mechanism includes a volume adjustment part that is inserted into the coating flow path, and a drive unit that adjusts the insertion amount of the volume adjustment part.

According to the coating device described above, the volume adjustment mechanism has a volume adjustment part and a drive unit, and when the drive unit adjusts the insertion amount of the volume adjustment part inserted into the coating flow path formed in the coating unit, the volume of the coating flow path increases, the pressure in the coating flow path decreases, and it becomes possible to draw the coating liquid from the discharge port to the coating flow path. That is, the volume adjustment mechanism adjusts the insertion amount of the volume adjustment part inserted into the coating unit to reduce the pressure inside the coating unit. As a result, it becomes possible to reduce the pressure inside the coating unit at a position near the discharge port, so that the effect thereof more readily reaches the discharge port. As a result, it becomes possible to carry out sufficient liquid cutoff at the discharge port when interrupting the application of the coating liquid by the coating unit, and to suppress dragging of the coating liquid at a coating end portion.

In addition, the volume adjustment mechanism may be configured to have a pair of the volume adjustment parts inserted from each of two ends of the coating flow path in the width direction.

According to this configuration, by adjusting the insertion amount of the pair of volume adjustment parts that are inserted into the coating flow path from each of the two ends of the flow path in the width direction (hereinafter referred to as width direction) perpendicular to the transport direction of the substrate, it becomes possible to increase the volume in the vicinity of each of the two ends of the coating flow path in the width direction, thereby reducing the pressure in the coating flow path and drawing the coating liquid from the discharge port toward the coating flow path. That is, it becomes possible to reduce the pressure in the coating flow path across the width direction, thereby causing the effect thereof to reach across the width direction of the discharge port. As a result, it is possible to suppress dragging of the coating liquid at the coating end portion across the width direction.

In addition, the coating flow path may have a pair of expanded spaces formed so as to protrude further in the width direction than each of the two ends of the discharge port in the width direction, and the pair of the volume adjustment parts may be inserted into the pair of the expanded spaces.

According to this configuration, the pair of volume adjustment parts are inserted into the pair of expanded spaces formed so as to protrude further in the width direction than each of the two ends of the discharge port in the width direction, and are thus less likely to inhibit the flow of the coating liquid.

In addition, the coating flow path may have a manifold that is long in the width direction, serving as a space for holding a coating liquid, and a slit that connects the manifold and the discharge port, and the pair of the expanded spaces may be formed so as to protrude from each of the two ends of the manifold in the width direction.

According to this configuration, since the expanded space is formed so as to protrude from the manifold, which is wider than the slit, the flow of the coating liquid is less likely to be inhibited as compared to when the expanded space is formed in the slit.

In addition, the cross sectional area of the expanded space in the width direction may be configured to be smaller than the cross sectional area of the manifold in the width direction.

According to this configuration, since the cross sectional area of the expanded space in the width direction is smaller than the cross sectional area of the manifold in the width direction, it is possible to make the cross sectional area in the width direction of the volume adjustment part that is inserted into the expanded space to be smaller than a case in which the cross sectional area of the expanded space in the width direction is equal to or greater than the cross sectional area of the manifold in the width direction. When the cross sectional area of the volume adjustment part in the width direction is reduced, the resistance received by the volume adjustment part is reduced when adjusting the insertion amount of the volume adjustment part, thereby making it possible to swiftly adjust the insertion amount of the volume adjustment part. As a result, the responsiveness of the volume adjustment mechanism improves, thereby making it easier to suppress the dragging of the coating liquid at the coating end portion.

In addition, a tip of the volume adjustment part inserted into the expanded space may be provided with a resistance portion formed such that the cross sectional area of at least a portion thereof in the width direction is substantially the same size as the cross sectional area of the expanded space, and the resistance portion may be moved by the drive unit inside the expanded space in reciprocating motion in the width direction.

According to this configuration, since a resistance portion is provided at the tip of the volume adjustment part, compared to a case in which the resistance portion is not provided, it becomes possible to increase the amount of change of the volume of the coating flow path due to adjustment of the insertion amount of the volume adjustment part, and to more quickly change the pressure in the coating flow path, making it easier to allow the effect thereof to reach the discharge port. As a result, it is possible to further suppress dragging of the coating liquid at the coating end portion.

In addition, the resistance portion is formed such that the cross sectional area in the width direction becomes smaller toward the center of the coating unit in the width direction.

According to this configuration, it is possible to reduce the force with which the coating liquid is pushed out, by the resistance portion, toward the discharge port via the coating flow path, when the volume adjustment part inserted into the expanded space is operated in the direction of being pushed into the expanded space. As a result, it is possible to prevent excessive application of the coating liquid.

In addition, the coating flow path may have a manifold that is long in the width direction, serving as a space for holding a coating liquid, and a slit that is wide in the width direction and connects the manifold and the discharge port, wherein the volume adjustment part is inserted into the manifold.

According to this configuration, since the volume adjustment part is inserted into the manifold, which is wider than the slit, the flow of the coating liquid is less likely to be inhibited as compared to when the volume adjustment part is inserted into the slit.

### [EFFECTS OF THE INVENTION]

According to the coating device of the present invention, it is possible to suppress dragging of the coating liquid at the coating end portion.

### [BRIEF DESCRIPTION OF THE DRAWINGS]

[Figure 1] is a schematic diagram showing a coating device according to one embodiment of the present invention, in a state of applying a coating liquid.
[Figure 2] is a schematic diagram showing the coating device according to one embodiment of the present invention, in a state in which application of the coating liquid is interrupted.
[Figure 3] is a diagram explaining a volume adjustment mechanism according to one embodiment of the present embodiment, where (a) is a cross-sectional view taken along the A-A line indicated by arrows in Figure 1, and (b) is a cross-sectional view taken along the B-B line indicated by arrows in Figure 2.
[Figure 4] is a diagram explaining a coating operation of a coating device according to one embodiment of the present invention, where (a) shows a time chart of the operations of a supply valve, a recovery valve, and a volume adjustment part, and (b) shows a state of a coating film formed by the coating device in the present embodiment.
[Figure 5] is a diagram showing a variation of a coating unit according to one embodiment of the present invention.
[Figure 6] is a diagram showing a variation of the coating unit according to one embodiment of the present invention.

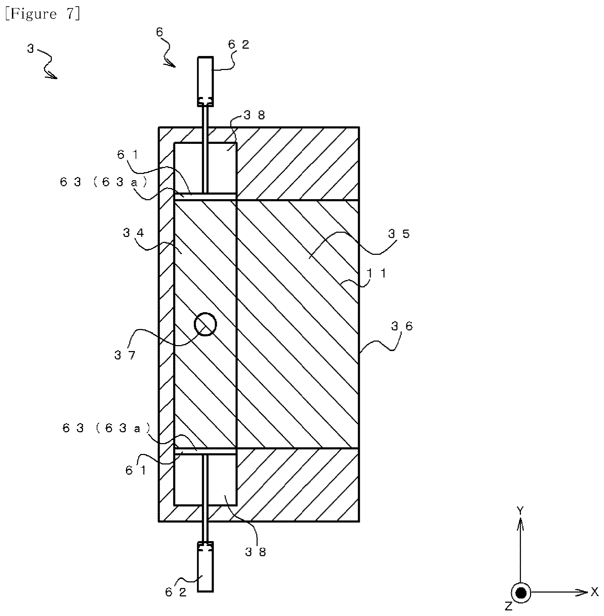

[Figure 7] is a diagram showing a variation of the volume adjustment part according to one embodiment of the present invention.
[Figure 8] is a diagram showing a variation of the coating unit according to one embodiment of the present invention.
[Figure 9] is a diagram showing a variation of the coating operation of the coating device according to one embodiment of the present invention.
[Figure 10] is a diagram showing a conventional coating device.
[Figure 11] is a diagram showing the state of a coating film formed by the conventional coating device.

### [EMBODIMENTS TO CARRY OUT THE INVENTION]

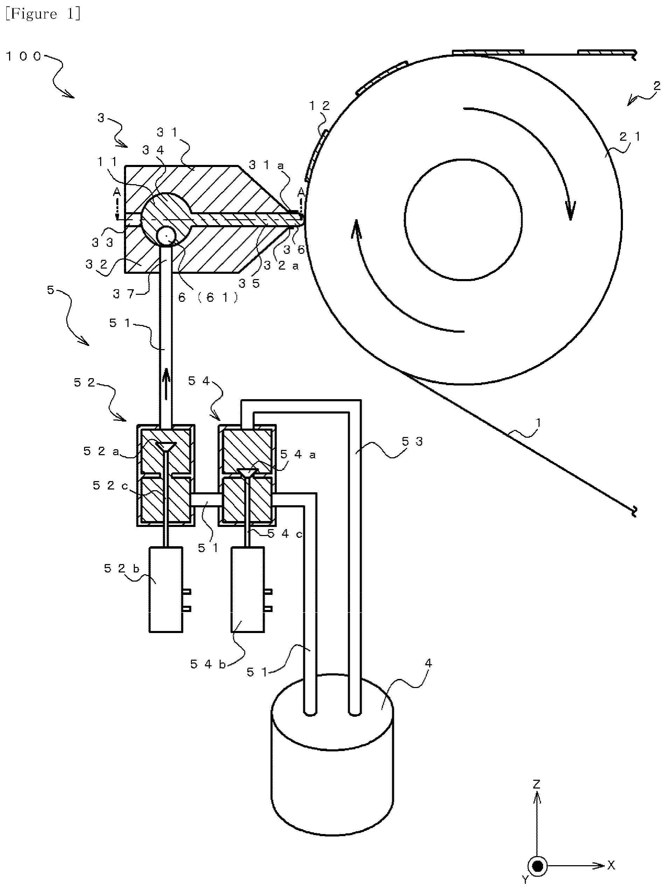

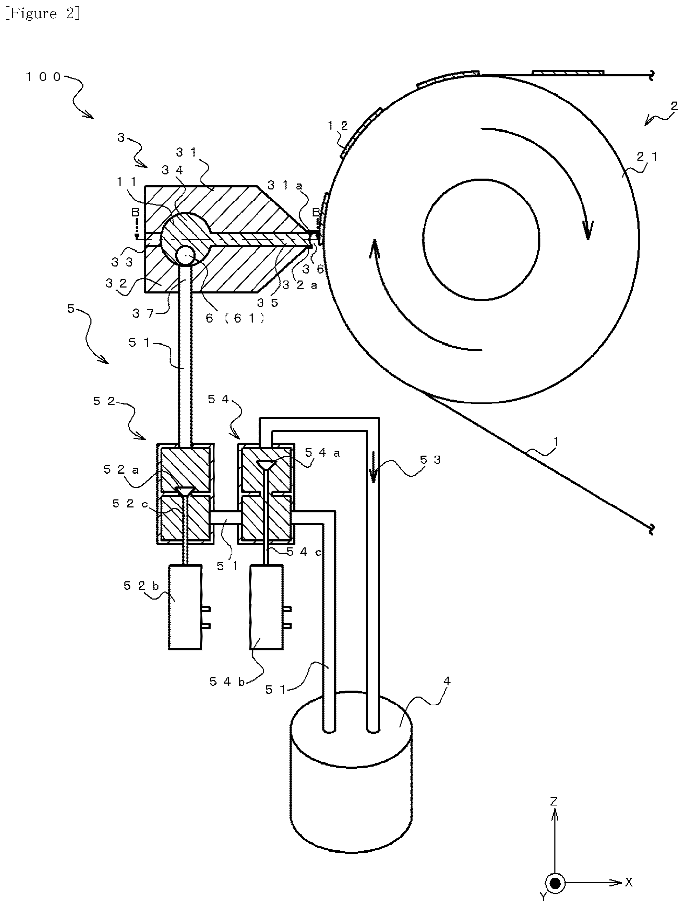

A coating device 100 according to the present embodiment will be described, with reference to the drawings. Figures 1 and 2 are schematic diagrams showing the coating device 100 according the first embodiment of the present invention, where Figure 1 shows a state of applying coating liquid 11 and Figure 2 shows a state in which application of the coating liquid 11 is interrupted. In the following description, the three axes of a Cartesian coordinate system are X, Y, and Z, wherein the horizontal directions are referred to as the X-axis direction and the Y-axis direction, and the direction perpendicular to the XY plane (i.e., the vertical direction) is referred to as the Z-axis direction.

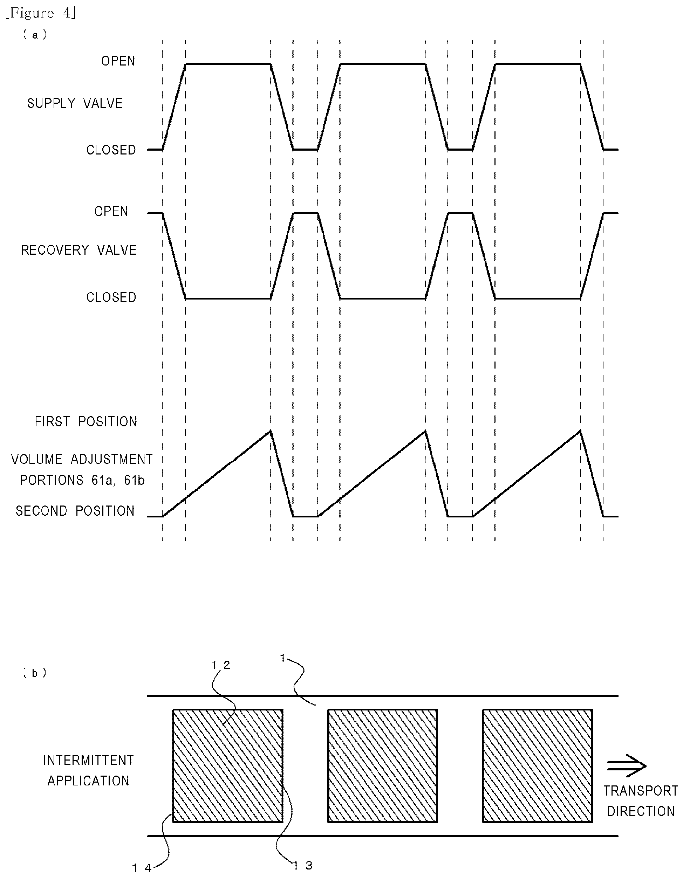

As shown in Figure 1, the coating device 100 comprises a conveying mechanism 2 for conveying a substrate 1, a coating unit 3 for applying the coating liquid 11 to the substrate 1, a tank 4 in which the coating liquid 11 is stored, a supply mechanism 5 for supplying the coating liquid 11 from the tank 4 to the coating unit 3, and a volume adjustment mechanism 6 that adjusts the volume of a manifold 34 formed in the coating unit 3. The coating unit 3 repeats application of the coating liquid 11 and interruption of the application with respect to the substrate 1 conveyed by the conveying mechanism 2, thereby intermittently forming a coating film 12 on the substrate 1. Intermittently applying the coating liquid 11 here means continuously applying the coating liquid 11 onto the substrate 1 with set intervals between each of the coating films 12 formed in the transport direction of the substrate 1, as shown in Figure 4(b).

The substrate 1 is a metal foil that becomes a battery electrode plate of a lithium ion battery; an aluminum foil, etc., is used when forming a positive electrode and a copper foil, etc., is used when forming a negative electrode. This substrate 1 is a strip-shaped sheet that is elongated in one direction, and is continuously conveyed by the conveying mechanism 2.

The coating liquid 11 is, for example, a slurry obtained by mixing an active material, a binder, and a conductive assistant in a solvent, and is used as a material (so-called electrode material) for battery electrode plates of lithium ion batteries. This coating liquid 11 is applied to the substrate 1 by the coating unit 3, thereby forming the coating film 11.

The conveying mechanism 2 is for conveying the substrate 1, which employs a roll-to-roll method in which the substrate 1 is conveyed by the rotation of a plurality of rollers. The transport speed of the substrate 1 by the conveying mechanism 2 is controlled by an undiagrammed control unit. The control unit is a general-purpose computer, for example, and will be treated as such in the following description. In the present embodiment, only a coating roller 21 that guides the substrate 1 to the location where the coating liquid 11 is applied is shown in the drawings. The coating roller 21 faces the coating unit 3 and is disposed so as to be a prescribed distance away from a discharge port 36 when the coating unit 3 applies the coating liquid 11. Therefore, it is possible to convey the substrate 1 while maintaining a constant distance from the coating unit 3.

The coating unit 3 is for applying the coating liquid 11 to the substrate 1 being conveyed to form the coating film 12, and is formed long along a width direction (the Y-axis direction in Figure 1) perpendicular to the transport direction of the substrate 1. In the following description, the width direction perpendicular to the transport direction of the substrate 1 is simply referred to as the width direction.

In addition, as shown in Figure 1, the coating unit 3 is formed by combining a first split body 31 having a tapered first lip 31a, and a second split body 32 having a tapered second lip 32a, with a shim plate 33 sandwiched therebetween. A manifold 34 which is a space that is long in the width direction and that holds the coating liquid 11, and a slit 35 that is connected to the manifold 34 and that is wide in the width direction, are formed inside the coating unit 3. The discharge port 36, which is the open end of the slit 35 and that is opened with the same length as the slit 35 in the width direction, is formed between the first lip 31a and the second lip 32a. That is, the manifold 34 and the discharge port 36 are connected via the slit 35.

The slit 35 is formed long in the width direction, in the same manner as the manifold 34. The width-direction dimension of the slit 35 is determined by the inner dimension of the shim plate 33 so that the coating liquid 11 having a width-direction dimension that is substantially the same as the width-direction dimension of the slit 35 can be applied onto the substrate 1. The dimension of the gap (height dimension) of the slit 35 is, for example, 0.1 to 10 mm. In the present embodiment, the direction of the gap of the slit 35 is the up-down direction (Z-axis direction in Figure 1), and the coating unit 3 is installed in an orientation such that the width direction is the horizontal direction. That is, the coating unit 3 is installed in an orientation in which the manifold 34 and the slit 35 are arranged side by side in the horizontal direction, so that the direction in which the coating liquid 11 held in the manifold 34 passes through the slit 35 and is discharged through the discharge port 36 is the horizontal direction.

In the present embodiment, the direction in which the coating liquid 11 passes through the discharge port 36 and flows to the substrate 1 is the horizontal direction, but the invention is not necessarily limited thereto, and the direction may be changed to any direction as appropriate. For example, the direction may be the upward direction or the downward direction.

The discharge port 36 faces the coating roller 21 across the substrate 1. That is, the discharge port 36 faces the substrate 1 on the front surface side of the substrate 1. It is thereby possible to apply the coating liquid 11 to the front surface side the substrate 1 in a state in which the distance between the discharge port 36 and the substrate 1 is maintained constant.

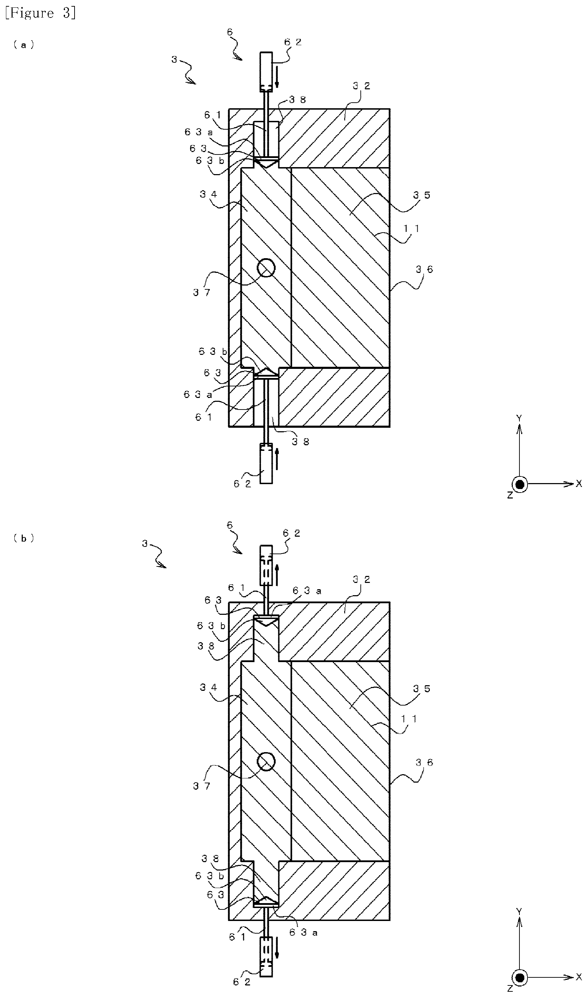

In addition, as shown in Figures 1 and 3(a), an inlet portion 37 is provided in the widthwise center portion of the coating unit 3. The inlet portion 37 is a through-hole that is connected to the manifold 34 from the outside of the coating unit 3, and the coating liquid 11 is configured to be supplied to the manifold 34 by the supply mechanism 5 via the inlet portion 37. In the present embodiment, the inlet portion 37 is connected to the bottom portion of the manifold 34.

The supply mechanism 5 is for supplying, to the coating unit 3, the coating liquid 11 stored in the tank 4. As shown in Figure 1, the supply mechanism 5 in the present embodiment comprises a supply path 51 that connects the coating unit 3 and the tank 4, a supply valve 52 that switches between open and closed states of the supply path 51, a recovery path 53 that connects the supply path 51 and the tank 4, a recovery valve 54 that switches between open and closed states of the recovery path 53, and an undiagrammed pump that feeds the coating liquid 11 from the tank 4 toward the coating unit 3.

As shown in Figure 1, the supply path 51 is a flow path that connects the coating unit 3 and the tank 4, and through which the coating liquid 11 is fed by the pump from the tank 4 to the coating unit 3. In the present embodiment, the supply path 51 is connected to the inlet portion 37, and the coating liquid 11 that is fed by the pump from the tank 4 is supplied to the manifold 34 via the supply path 51 and the inlet portion 37. Then, the coating liquid 11 supplied to the manifold 34 is discharged from the discharge port 36 via the slit 35. As a result, the coating liquid 11 is applied onto the substrate 1 to form the coating film 12.

The supply valve 52 is for switching the state of the supply path 51 between two states: an open state in which a flow path for the coating liquid 11 is formed and a closed state in which the flow path for the coating liquid 11 is blocked. The supply valve 52 is provided in the middle of the supply path 51. Specifically, as shown in Figure 1, the coating liquid 11 inlet portion of the supply valve 52 is connected to the supply path 51 via the coating liquid 11 inlet portion of the recovery valve 54, and the coating liquid 11 outlet portion of the supply valve 52 is connected to the coating unit 3 via the supply path 51. That is, the coating liquid 11 that is fed by the pump from the tank 4 is supplied to the supply valve 52 from the inlet portion of the supply valve 52 via the inlet portion of the recovery valve 54 and the supply path 51, and is then supplied to the coating unit 3 from the outlet portion of the supply valve 52 via the supply path 51.

In addition, as shown in Figure 1, the supply valve 52 has a valve body 52a therein, and is configured to switch between the open and closed states of the supply path 51 by changing the position of the valve body 52a. Specifically, as shown in Figure 1, the valve body 52a is connected to a valve body drive unit 52b (for example, an air cylinder or an electric motor) serving as a drive source; when the valve body drive unit 52b moves a shaft 52c connected to the valve body 52a in the opening and closing directions of the supply path 51, the valve body 52a opens and closes the supply path 51. The valve body drive unit 52b is controlled by the above-mentioned control unit.

The supply mechanism 5 switches the supply path 51 to the open state using the supply valve 52 as shown in Figure 1 to supply the coating liquid 11 to the coating unit 3, and switches the supply path 51 to the closed state using the supply valve 52 as shown in Figure 2 to stop the supply of the coating liquid 11 to the coating unit 3. Then, by repeating the switching of the supply path 51 between the open and closed states with the supply valve 52, application of the coating liquid 11 by the coating unit 3 and interruption of the application are repeated, thereby intermittently applying the coating liquid 11 to the substrate 1 being conveyed by the conveying mechanism 2.

As shown in Figure 1, the recovery path 53 connects the tank 4 and the supply path 51 that is on the upstream side of the supply valve 52 in the flow path for the coating liquid 11, via the outlet portion of the recovery valve 54. That is, the coating liquid 11 flowing through the supply path 51 is supplied from the inlet portion of the recovery valve 54 to the recovery valve 54, and is recovered into the tank 4 from the outlet portion of the recovery valve 54 via the recovery path 53.

The recovery valve 54 is for switching the state of the recovery path 53 between two states: an open state in which a flow path for the coating liquid 11 is formed and a closed state in which the flow path for the coating liquid 11 is blocked. As shown in Figure 1, the recovery valve 54 has a valve body 54a, and is configured to switch between the open and closed states of the recovery path 53 by changing the position of the valve body 54a. Specifically, as shown in Figure 1, the valve body 54a is connected to a valve body drive unit 54b (for example, an air cylinder or an electric motor) serving as a drive source; when the valve body drive unit 54b moves a shaft 54c connected to the valve body 54a in the opening and closing directions of the recovery path 53, the valve body 54a opens and closes the recovery path 53. The valve body drive unit 54b is controlled by the above-mentioned control unit.

The supply mechanism 5 switches the recovery path 53 to the open state with the recovery valve 54 as shown in Figure 2 to recover the coating liquid 11 into the tank 4, and switches the recovery path 53 to the closed state with the recovery valve 54 as shown in Figure 1 to stop the recovery of the coating liquid 11 into the tank 4.

Here, as shown in Figure 4(a), the supply mechanism 5 is configured to switch between the open and closed states of the recovery path 53 with the recovery valve 54 in accordance with the switching operation of the open and closed states of the supply path 51 with the supply valve 52. Specifically, as shown in Figures 1 and 2, the recovery valve 54 switches the recovery path 53 to the closed state when the supply valve 52 switches the supply path 51 to the open state, and switches the recovery path 53 to the open state when the supply valve 52 switches the supply path 51 to the open state.

As a result, as shown in Figure 2, when the supply valve 52 switches the supply path 51 to the closed state to stop the supply of the coating liquid 11 to the coating unit 3, it is possible to recover the coating liquid 11 in the supply path 51 located upstream of the supply valve 52 into the tank 4 via the recovery path 53, thereby preventing the pressure from becoming high inside the supply path 51 located on the upstream side of the supply valve 52. As a result, it is possible to prevent the coating liquid 11 from being excessively supplied to the coating unit 3 when the supply valve 52 switches the supply path 51 to the open state.

In addition, when causing the supply valve 52 to switch the supply path 51 to the closed state to interrupt the application of the coating liquid 11 by the coating unit 3, the supply mechanism 5 causes the valve body drive unit 52b to move the shaft 52c connected to the valve body 52a to the closing direction of the supply path 51, as shown in Figure 2, to reduce the pressure inside the coating unit 3, thereby drawing the coating liquid 11 from the discharge port 36 toward the supply path 51. As a result, the coating device 100 carries out liquid cutoff by means of the discharge port 36 when interrupting the application of the coating liquid 11 by the coating unit 3.

Here, the coating device 100 reduces the pressure inside the coating unit 3 by operating the valve body 52a of the supply valve 52 provided at a position away from the discharge port 36, making it difficult for the effect thereof of reach the discharge port 36. Therefore, there are cases in which liquid cutoff cannot be sufficiently carried out at the discharge port 36, generating dragging (dragging 933 shown in Figure 11(a)) of the coating liquid 11 at a coating end portion 14 (refer to Figure 4(b)), which is the terminal end of the coating film 12. Therefore, the coating device 100 according to the present embodiment causes the volume adjustment mechanism 6 to reduce the pressure inside the coating unit 3 at a location closer to the discharge port 36 than the supply valve 52, in order to suppress dragging of the coating liquid 11 at the coating end portion 14.

The volume adjustment mechanism 6 will be described below.

The volume adjustment mechanism 6 is for changing the volume of the coating flow path. The coating flow path here refers to a flow path formed in the coating unit 3 for supplying the coating liquid 11 to the discharge port 36, and refers to the manifold 34 and the slit 35 in the present embodiment. As shown in Figure 3(a), the volume adjustment mechanism 6 includes a pair of volume adjustment parts 61 inserted from each of the two ends of the coating flow path in the width direction, and a drive unit 62 that adjusts the insertion amount of each of the pair of volume adjustment parts 61.

As shown in Figure 3(a), the volume adjustment part 61 has a rod-like shape formed long in one direction, and is inserted into the manifold 34. Here, as shown in Figure 3(a), the manifold 34 has a pair of expanded spaces 38 formed so as to protrude further in the width direction than each of the two ends of the discharge port 36 in the width direction.

In the present embodiment, the pair of volume adjustment parts 61 are configured to be inserted into the pair of expanded spaces 38. Specifically, as shown in Figure 3(a), each of the volume adjustment parts 61 is inserted into each of the expanded spaces 38 so as to extend from walls forming each of the expanded spaces 38 formed in the coating unit 3 toward the expanded space 38 into which the other volume adjustment part 61 is inserted.

In this manner, in the present embodiment, the pair of volume adjustment parts 61 are inserted into the pair of expanded spaces 38 formed so as to protrude further in the width direction than each of the two ends of the discharge port 36 in the width direction, and are thus less likely to inhibit the flow of the coating liquid 11 compared to inserting the volume adjustment part 61 to a portion of the coating flow path other than the pair of expanded spaces 38. Specifically, if there is a protrusion (the volume adjustment part 61 in the present embodiment) in a flow path through which the coating liquid 11 flows, there may be cases in which the flow rate of the coating liquid 11 changes due to the protrusion, causing width-direction variability in the amount of the coating liquid 11 discharged from the discharge port 37. That is, there may be cases in which the flow of the coating liquid 11 is inhibited due to the volume adjustment part 61. In contrast, in the present embodiment, since the volume adjustment part 61 is inserted into the expanded space 38 formed so as to protrude from the coating flow path, the flow of the coating liquid 11 is less likely to be inhibited.

In addition, since the expanded space 38 is formed so as to protrude from the manifold 34, which is wider than the slit 35, the flow of the coating liquid 11 is less likely to be inhibited as compared to when the expanded space 38 is formed in the slit 35. Specifically, if there is a recess (the expanded space 38 in the present embodiment) in a flow path through which the coating liquid 11 flows, there may be cases in which the flow rate of the coating liquid 11 changes due to the recess, causing width-direction variability in the amount of the coating liquid 11 discharged from the discharge port 37. That is, the expanded space 38 may become a factor that inhibits the flow of the coating liquid 11. In contrast, in the present embodiment, since the expanded space 38 is formed so as to protrude from the manifold 34, which is wider than the slit 35, the flow of the coating liquid 11 is less likely to be inhibited by the expanded space 38 as compared to when the expanded space 38 is formed in the slit 35, which is narrower than the manifold 34.

In addition, as shown in Figures 1, 2, 3(a), and 3(b), the cross sectional area of the expanded space 38 in the width direction is smaller than the cross sectional area of the manifold 34 in the width direction. In the present embodiment, of the first split body 31, the second split body 32, and the shim 33 forming the manifold 34, the expanded space 38 is formed only in the second split body 32, thereby making the cross sectional area of the expanded space 38 in the width direction smaller than the cross sectional area of the manifold 34 in the width direction. In this manner, since the expanded space 38 is formed only in the second split body 32, even if configurations other than the second split body 32 constituting the coating unit 3 is changed, such as changing the shim 33 to change the height dimension of the slit 35, the size and shape of the expanded space 38 does not change.

The drive unit 62 is a drive source (for example, an air cylinder or an electric motor) for adjusting the insertion amount of the volume adjustment part 61, and is connected to the volume adjustment part 61, as shown in Figure 1. In the present embodiment, the drive unit 62 is an electric motor and is able to vary the speed of operation for adjusting the insertion amount of the volume adjustment part 61. The drive unit 62 causes the volume adjustment part 61 to move in reciprocating motion in the longitudinal direction of the volume adjustment part 61 to adjust the volume of the coating flow path.

Specifically, the drive unit 62 is operated such that the volume adjustment part 61 is drawn out from the expanded space 38, thereby increasing the volume of the coating flow path and reducing the pressure in the coating flow path, and the drive unit 62 is operated such that the volume adjustment part 61 is pushed into the manifold 34, thereby decreasing the volume of the coating flow path and increasing the pressure in the coating flow path. In addition, the operation of the drive unit 62 is controlled by the above-mentioned control unit.

Here, a resistance portion 63 is provided at the tip of the volume adjustment part 61, which is moved in reciprocating motion by the drive unit 62, the tip being inserted into the expanded space 38. As shown in Figure 3(a), the resistance portion 63 in the present embodiment is composed of a disk portion 63a, and a cone portion 63b.

The disk portion 63a is formed such that the cross sectional area thereof in the width direction is substantially the same size as the cross sectional area of the expanded space 38. Substantially the same size here refers to a size at which the resistance portion 63 can be operated in accordance with the operation of the volume adjustment part 61 by the drive unit 62, and a size at which it is possible to prevent the coating liquid 11 from leaking out onto the wall side of the expanded space 38 into which the volume adjustment part 61 is inserted when the resistance portion 63 is operated. As a result, when the drive unit 62 moves the volume adjustment part 61 in reciprocating motion, it becomes possible to increase the amount of change in the volume of the coating flow path compared to when the resistance portion 63 is not provided, so that it is possible to quickly reduce the pressure in the coating flow path when the volume of the coating flow path is increased.

In addition, the cone portion 63b is formed such that the cross sectional area thereof in the width direction decreases as the volume adjustment part 61 moves in the direction of being inserted into the expanded space. As a result, when the drive unit 62 is operated such that the volume adjustment part 61 is pushed into the expanded space 38 to reduce the volume of the coating flow path, it is possible to reduce the force with which the coating liquid 11 is pushed out toward the discharge port 36 compared to when the resistance portion 63 is composed only of the disk portion 63a.

When the drive unit 62 is operated such that the volume adjustment part 61 is pushed into the expanded space 38, the volume adjustment part 61 is operated such that the tip of the resistance portion 63 is located at the same position as the end of the discharge port 36 in the width direction, as shown in Figure 3(a). The position of the volume adjustment part 61 after this operation will be referred to as the first position in the following description. In addition, when the drive unit 62 is operated such that the volume adjustment part 61 is drawn out from the expanded space 38, the volume adjustment part 61 is operated such that the volume adjustment part 61 is drawn out from the expanded space 38, leaving the resistance portion 63 in the expanded space 38, as shown in Figure 3(b). The position of the volume adjustment part 61 after this operation will be referred to as the second position in the following description.

In addition, the volume adjustment mechanism 6 according to the present embodiment has a first adjustment mode in which the insertion amount of the pair of volume adjustment parts 61 is adjusted by the drive unit 62 such that the insertion amount of the pair of volume adjustment parts 61 becomes small when interrupting the application of the coating liquid 11 by the coating unit 3, and a second adjustment mode in which the insertion amount of the volume adjustment part 61 is adjusted by the drive unit 62 such that the insertion amount of the volume adjustment part 61 adjusted in the first adjustment mode is returned to the insertion amount before the adjustment, when resuming the application of the coating liquid 11 by the coating unit 3. The two modes of the first adjustment mode and the second adjustment mode are switched by the above-mentioned control unit.

A specific explanation will be given. In the first adjustment mode, the volume adjustment mechanism 6 operates the drive unit 62 such that the pair of volume adjustment parts 61 are drawn out from the pair of expanded spaces 38 such that the pair of volume adjustment parts 61 move from the first position shown in Figure 3(a) to the second position shown in Figure 3(b), thereby increasing the volume of the coating flow path and decreasing the pressure in the coating flow path. That is, the volume adjustment mechanism 6 operates the pair of volume adjustment parts 61 inserted into the coating unit 3 to reduce the pressure inside the coating unit 3. As a result, it becomes possible to reduce the pressure inside the coating unit 3 at a position near the discharge port 36, so that the effect thereof more readily reaches the discharge port 36. As a result, it becomes possible to carry out sufficient liquid cutoff at the discharge port 36 when interrupting the application of the coating liquid 11 by the coating unit 3, and to suppress dragging of the coating liquid 11 at the coating end portion 14.

Here, since the resistance portion 63 composed of the disk portion 63a and the cone portion 63b is provided at the tip of the volume adjustment part 61, compared to a case in which the resistance portion 63 is not provided, it becomes possible to increase the amount of change in the volume of the coating flow path by adjusting the insertion amount of the pair of volume adjustment parts 61 and more quickly change the pressure in the coating flow path, making it easier to allow the effect thereof to reach the discharge port 36. As a result, it is possible to further suppress dragging of the coating liquid 11 at the coating end portion 14.

In addition, in the first adjustment mode, the drive unit 62 adjusts the insertion amount of the pair of volume adjustment parts 61 that are inserted into the coating flow path from each of the two ends of the coating flow path in the width direction, thereby increasing the volume in the vicinity of each of the two ends of the coating flow path in the width direction. As a result, the pressure in the coating flow path can be reduced at a higher speed than when increasing the volume of the coating flow path by operating one of the volume adjustment parts 61, so that the dragging of the coating liquid 11 at the coating end portion 13 can be further suppressed. In addition, it becomes possible to reduce the pressure in the coating flow path across the width direction, thereby causing the effect thereof to reach across the width direction of the discharge port 36. As a result, it is possible to suppress dragging of the coating liquid 11 at the coating end portion 14 across the width direction.

In addition, in the second adjustment mode, the volume adjustment mechanism 6 operates the drive unit 62 such that the pair of volume adjustment parts 61 are pushed into the pair of expanded spaces 38 such that the position of the pair of volume adjustment parts 61 is returned to the first position shown in Figure 3(a) from the second position shown in Figure 3(b), thereby decreasing the volume of the coating flow path and increasing the pressure in the coating flow path. As a result, the coating liquid 11 is pushed out from the coating flow path toward the discharge port 36 and discharged from the discharge port 36.

In addition, since the resistance portion 63 composed of the disk portion 63a and the cone portion 63b is provided at the tip of the volume adjustment part 61, drag on the coating liquid 11 when pushing the pair of volume adjustment parts 61 into the pair of expanded spaces 38 can be reduced compared to when the resistance portion 63 is composed only of the disk portion 63a, so that it is possible to reduce the force with which the coating liquid 11 is pushed out toward the discharge port 36. As a result, it is possible to prevent excessive application of the coating liquid 11 when resuming the application of the coating liquid 11, thereby preventing swelling (swelling 934 in Figure 11(b)) of the coating film 12 at a coating start portion 13 (refer to Figure 4(b)), which is the starting end of the coating film 12.

In addition, as described above, since the cross sectional area of the expanded space 38 in the width direction is smaller than the cross sectional area of the manifold 34 in the width direction, it is possible do make the cross sectional area in the width direction of the volume adjustment part 61 that is inserted into the expanded space 38 to be smaller than a case in which the cross sectional area of the expanded space 38 in the width direction is equal to or greater than the cross sectional area of the manifold 34 in the width direction. When the cross sectional area of the volume adjustment part 61 in the width direction is reduced, the resistance received by the volume adjustment part 61 is reduced when adjusting the insertion amount of the volume adjustment part 61, thereby making it possible to swiftly adjust the insertion amount of the volume adjustment part 61. As a result, the responsiveness of the volume adjustment mechanism 6 improves, thereby making it easier to suppress the dragging of the coating liquid 11 at the coating end portion 14. In addition, since the amount of change in the volume of the coating flow path when adjusting the insertion amount of the volume adjustment part 61 becomes smaller than when the cross sectional area of the expanded space 38 in the width direction is the same as or greater than the cross sectional area of the manifold 34, it becomes possible to finely adjust the pressure in the coating flow path.

The operation of the coating device 100 according to the present embodiment will be specifically described below.

In the following description, a state will be described in which the supply of coating liquid 11 to the coating unit 3 is not being carried out by the supply mechanism 5, and application of the coating liquid 11 is not being carried out, as shown in Figure 4(a). That is, as shown in Figure 2, a state will be described in which the supply path 51 is put in the closed state by the supply valve 52, and the recovery path 53 is put in the open state by the recovery valve 54. It is assumed that the pump is constantly feeding the coating liquid 11 from the tank 4 to the coating unit 3 until the application of the coating liquid 11 by the coating unit 3 is completely stopped.

First, the operation by which the coating device 100 starts the application of the coating liquid 11 will be described. As shown in Figures 1 and 4(a), the coating device 100 uses the supply valve 52 to switch the supply path 51 from the closed state to the open state, and uses the recovery valve 54 to switch the recovery path 53 from the open state to the closed state. As a result, the coating liquid 11 is supplied by the pump from the tank 4 to the manifold 34 via the supply path 51. Then, the coating liquid 11 supplied to the manifold 34 is discharged from the discharge port 36 via the slit 35. As a result, as shown in Figure 4(b), the coating start portion 13 is formed on the substrate 1 conveyed by the conveying mechanism 2. The series of operations carried out when the coating device 100 starts the application of the coating liquid 11 is also carried out when the application of the coating liquid 11 is resumed after the application of the coating liquid 11 is interrupted.

In addition, when the coating device 100 starts the application of the coating liquid 11, the pair of volume adjustment parts 61 are positioned in the first position, as shown in Figure 3(a).

Then, the coating device 100 continues the application of the coating liquid 11 by the coating unit 3 while maintaining the states of the supply valve 52, the recovery valve 53, and the volume adjustment part 61, to form the coating film 12 on the substrate 1 conveyed by the conveying mechanism 2, as shown in Figure 4(b).

The operation by which the coating device 100 interrupts the application of the coating liquid 11 will be described next. As shown in Figures 2 and 4(a), the coating device 100 uses the supply valve 52 to switch the supply path 51 from the open state to the closed state, and uses the recovery valve 54 to switch the recovery path 53 from the closed state to the open state. As a result, the supply of the coating liquid 11 to the manifold 34 is stopped and the application of the coating liquid 11 by the coating unit 3 is interrupted, thereby forming the coating end portion 14, which is the terminal end of the coating film 12, on the substrate 1 conveyed by the conveying mechanism, as shown in Figure 4(b).

Here, the volume adjustment mechanism 6 executes the operation in the first adjustment mode simultaneously with the operations of the supply valve 52 and the recovery valve 54. Specifically, the volume adjustment mechanism 6 operates the drive unit 62 such that the pair of volume adjustment parts 61 are drawn out from the pair of expanded spaces 38 such that the pair of volume adjustment parts 61 move from the first position shown in Figures 3(a) and 4(a) to the second position shown in Figures 3(b) and 4(a), thereby carrying out the liquid cutoff at the discharge port 36.

The operation by which the coating device 100 resumes the application of the coating liquid 11 will be described next. Since operations other than that of the volume adjustment mechanism 6 are the same as when starting the application of the coating liquid 11, the descriptions thereof will be omitted.

The volume adjustment mechanism 6 executes the operation in the second adjustment mode simultaneously with the operations of the supply valve 52 and the recovery valve 54. Specifically, the volume adjustment mechanism 6 operates the drive unit 62 such that the pair of volume adjustment parts 61 are pushed into the pair of expanded spaces 38 such that the position of the pair of volume adjustment parts 61 is returned to the first position shown in Figures 3(a) and 4(a) from the second position shown in Figures 3(b) and 4(a), thereby decreasing the volume of the coating flow path and increasing the pressure in the coating flow path.

As a result, the application of the coating liquid 11 by the coating unit 3 is resumed and the coating start portion 13 is formed. Here, as shown in Figure 4(a), the volume adjustment mechanism 6 is configured to move the volume adjustment part 61 from the second position to the first position at a slower speed than when moving the volume adjustment part 61 from the first position to the second position. As a result, it is possible to prevent the pressure in the coating flow path from rapidly increasing, thereby preventing excessive application of the coating liquid 11 when resuming the application of the coating liquid 11, and preventing the coating film 12 from swelling at the coating start portion 13. In addition, the coating device 100 repeatedly carries out the operation described above as shown in Figure 4(a), thereby intermittently applying the coating liquid 11 to the substrate 1, as shown in Figure 4(b).

In this manner, according to the coating device 100 of the present embodiment, the volume adjustment mechanism 6 has the volume adjustment part 61 and the drive unit 62, and when the drive unit 62 adjusts the insertion amount of the volume adjustment part 61 inserted into the coating flow path formed in the coating unit 3, the volume of the coating flow path increases, the pressure in the coating flow path decreases, and it becomes possible to draw the coating liquid 11 from the discharge port 36 to the coating flow path. That is, the volume adjustment mechanism 6 adjusts the insertion amount of the volume adjustment part 61 inserted into the coating unit 3 to reduce the pressure inside the coating unit 3. As a result, it becomes possible to reduce the pressure inside the coating unit 3 at a position near the discharge port 36, so that the effect thereof more readily reaches the discharge port 36. As a result, it becomes possible to carry out sufficient liquid cutoff at the discharge port 36 when interrupting the application of the coating liquid 11 by the coating unit 3, and to suppress dragging of the coating liquid 11 at the coating end portion 14.

In addition, according to the coating device 100 of the present embodiment, by adjusting the insertion amount of the pair of volume adjustment parts 61 that are inserted into the coating flow path from each of the two ends of the coating flow path in the width direction, the pressure in the coating flow path can be decreased across the width direction, thereby causing the effect thereof to reach across the width direction of the discharge port 36. As a result, it is possible to suppress dragging of the coating liquid 11 at the coating end portion 14 across the width direction.

An embodiment of the present invention was described in detail above with reference to the drawings, but the configurations in the embodiment and combinations thereof are merely examples, and additions, omissions, substitutions, and other modifications can be made without departing from the scope of the invention. For example, in the embodiment described above, as example of a configuration was described in which the volume adjustment mechanism 6 includes a pair of volume adjustment parts 61, but the invention is not limited thereto; the volume adjustment mechanism 6 may be configured to have only one volume adjustment part 61.

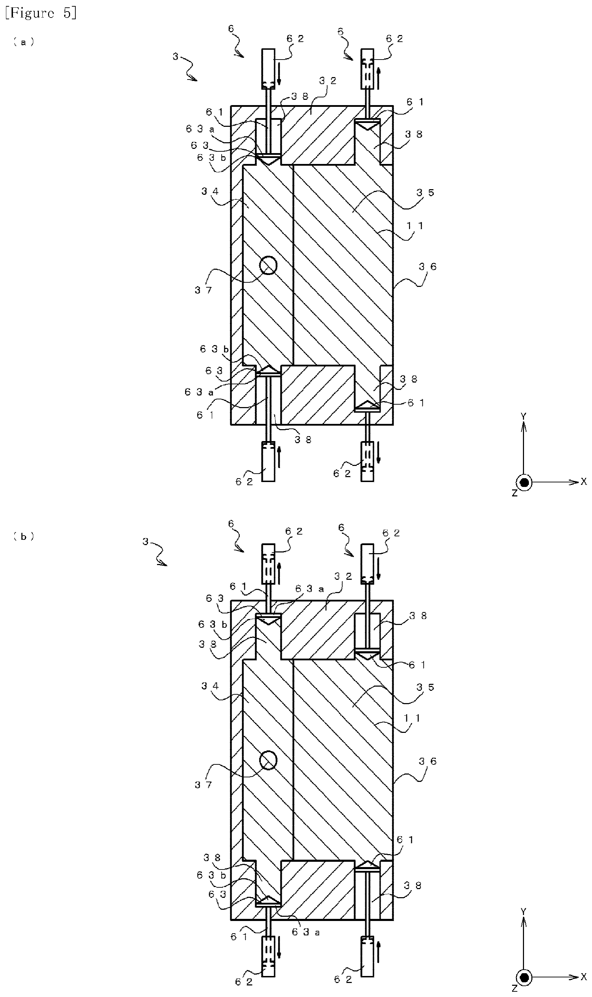

Additionally, the volume adjustment mechanism 6 may have a plurality of pairs of volume adjustment parts 61, and the pairs of volume adjustment parts 61 may be arranged in the coating flow path side by side along the direction in which the coating liquid 11 flows. Specifically, as shown in Figures 5(a) and 5(b), the manifold 34 and the slit 35 each has a pair of expanded spaces 38, and each of the pairs of the volume adjustment parts 61 is inserted into each of the pairs of the expanded spaces 38. Here, when moving the pair of volume adjustment parts 61 inserted into the pair of expanded spaces 38 provided in the manifold 34 from the second position shown in Figure 5(b) to the first position shown in Figure 5(a), the volume adjustment mechanism 6 moves the pair of volume adjustment parts 61 inserted in the pair of expanded spaces 38 provided in the slit 35 from the first position shown in Figure 5(b) to the second position shown in Figure 5(a). That is, when resuming the application of the coating liquid 11, the pressure in the coating flow path, which has increased as a result of operating the pair of volume adjustment parts 61 inserted in the pair of expanded spaces 38 provided in the manifold 34, is reduced by operating the pair of volume adjustment parts 61 inserted in the pair of expanded spaces 38 provided in the slit 35. As a result, it is possible to prevent excessive application of the coating liquid 11 when resuming the application of the coating liquid 11, and preventing the coating film 12 from swelling at the coating start portion 13.

In addition, in the embodiment described above, an example was described in which the first position is the position after the volume adjustment part 61 is operated such that the tip of the resistance portion 63 is located at the same position as the end of the discharge port 36 in the width direction, and the second position is the position after the volume adjustment part 61 is operated such that the volume adjustment part 61 is drawn out from the expanded space 38, leaving the resistance portion 63 in the expanded space 38, but the invention is not limited thereto; the positions may be changed in accordance with the film thickness or the width-direction dimension of the coating film 12 to be formed. That is, the first and second positions may be changed as appropriate in accordance with the conditions for applying the coating liquid 11, to thereby control the amount of change in the volume of the coating path.

In addition, in the embodiment described above, an example was described in which the expanded space 38 is formed in the second split body 32, but the invention is not limited thereto. For example, the expanded space may be formed in the first split body 31.

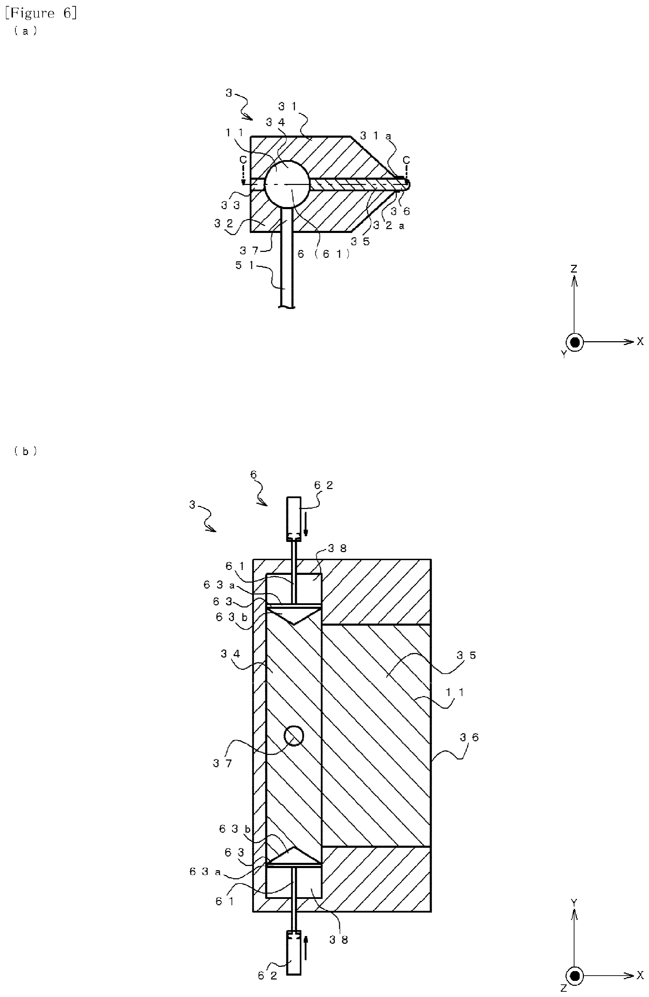

In addition, in the embodiment described above, an example was described in which the cross sectional area of the expanded space 38 in the width direction is smaller than the cross sectional area of the manifold 34 in the width direction, but the invention is not limited thereto; as shown in Figures 6(a) and 6(b), the cross sectional area of the expanded space 38 in the width direction may be the same size as the cross sectional area of the manifold 34 in the width direction. In this case, as shown in Figures 6(a) and 6(b), the cross sectional area of the volume adjustment part 61 in the width direction may also be the same size as the cross sectional area of the manifold 34 in the width direction.

In addition, in the embodiment described above, an example was described in which the resistance portion 63 is composed of the disk portion 63a and the cone portion 63b, but the invention is not limited thereto; it suffices if at least a portion of the cross sectional area of the resistance portion 63 in the width direction is substantially the same size as the cross sectional area of the expanded space 38. For example, as shown in Figure 6, the resistance portion 63 may be composed of only the disk portion 63a.

In addition, in the embodiment described above, an example was described in which the resistance portion 63 is provided at the tip of the volume adjustment part 61, but it is not necessary to provide the resistance portion 63.

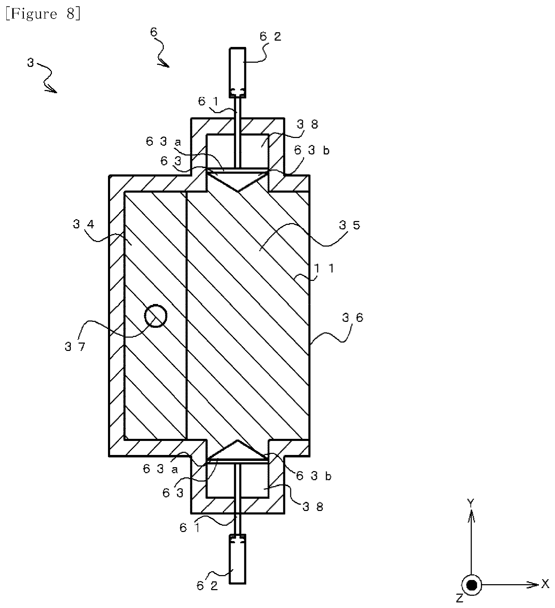

In addition, in the embodiment described above, an example was described in which the manifold 34 has a pair of expanded spaces 38, but the invention is not limited thereto; it suffices if at least the coating flow path has the expanded space 38. For example, as shown in Figure 8, the slit 35 may have the expanded space 38.

In addition, in the embodiment described above, an example was described in which the coating flow path has a pair of the expanded spaces 38, but the number of the expanded spaces 38 may be one.

In addition, it is not necessary for the coating flow path to have the expanded space 38. That is, the manifold 34, the slit 35, and the discharge port 36 may be formed to have the same dimension in the width direction.

In addition, in the embodiment described above, the application of the coating liquid 11 by the coating unit 3 and interruption of the application are carried out by switching between the open and closed states of the supply path 51 and the recovery path 53 using the supply valve 52 and the recovery valve 54, but may be carried out by the volume adjustment mechanism 6. That is, it is not necessary for the coating device 100 to include the supply valve 52 and the recovery valve 54.

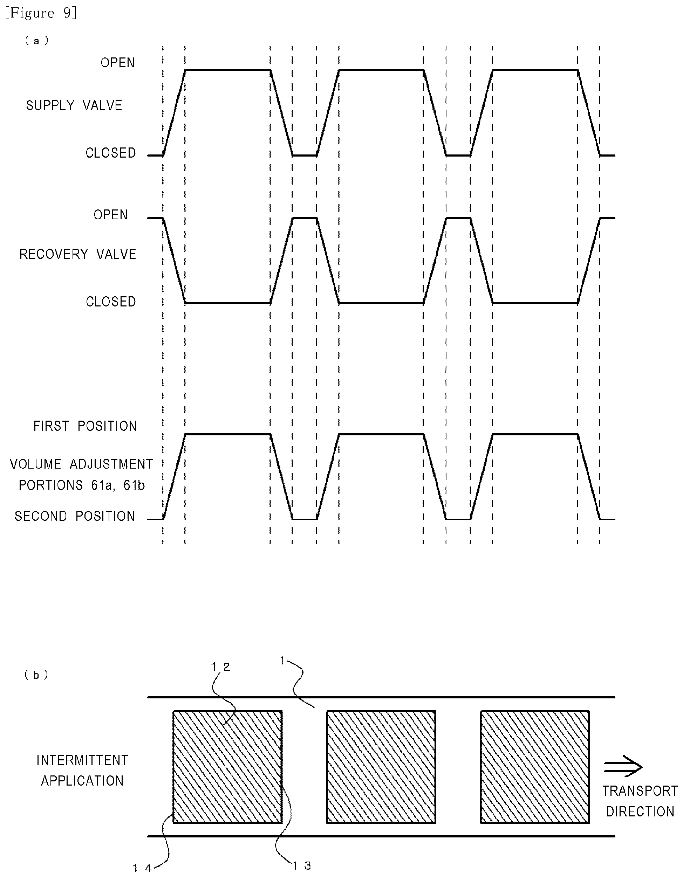

In addition, in the embodiment described above, an example was described in which the volume adjustment mechanism 6 moves the volume adjustment part 61 from the second position to the first position at a slower speed than when moving the volume adjustment part 61 from the first position to the second position; however, the volume adjustment part 61 may be moved from the second position to the first position at the same speed, as shown in Figure 9(a).

### [DESCRIPTIONS OF THE REFERENCE SYMBOLS]

- 100: Coating device
- 1: Substrate
- 11: Coating liquid
- 12: Coating film
- 13: Coating start portion
- 14: Coating end portion
- 2: Conveying mechanism
- 21: Coating roller
- 3: Coating unit
- 31: First split body
- 31a: First lip
- 32: Second split body
- 32a: Second lip
- 33: Shim plate
- 34: Manifold
- 35: Slit
- 36: Discharge port
- 37: Inlet portion
- 38: Expanded space
- 4: Tank
- 5: Supply mechanism
- 51: Supply path
- 52: Supply valve
- 52a: Valve body
- 52b: Valve body drive unit
- 52c: Shaft
- 53: Recovery path
- 54: Recovery valve
- 54a: Valve body
- 54b: Valve body drive unit
- 54c: Shaft
- 6: Volume adjustment mechanism
- 61: Volume adjustment part
- 62: Drive unit
- 63: Resistance portion
- 63a: Disk portion
- 63b: Cone portion

## Claims

1. A coating device that applies a coating liquid to a substrate being conveyed, the device comprising:
a coating unit in which is formed a discharge port that is long in a width direction perpendicular to a transport direction of the substrate and a coating flow path that is connected to the discharge port and supplies a coating liquid to the discharge port; and
a volume adjustment mechanism that changes the volume of the coating flow path,
wherein
the volume adjustment mechanism includes a volume adjustment part that is inserted in the coating flow path, and a drive unit that adjusts the insertion amount of the volume adjustment part.

2. The coating device according to claim 1, wherein
the volume adjustment mechanism has a pair of the volume adjustment parts inserted from each of two ends of the coating flow path in the width direction.

3. The coating device according to claim 2, wherein
the coating flow path has a pair of expanded spaces formed so as to protrude further in the width direction than each of the two ends of the discharge port in the width direction, and
the pair of the volume adjustment parts are inserted into the pair of the expanded spaces.

4. The coating device according to claim 3, wherein
the coating flow path has a manifold that is long in the width direction, serving as a space for holding a coating liquid, and a slit that connects the manifold and the discharge port, and
the pair of the expanded spaces are formed so as to protrude from each of the two ends of the manifold in the width direction.

5. The coating device according to claim 4, wherein
the cross sectional area of the expanded space in the width direction is smaller than the cross sectional area of the manifold in the width direction.

6. The coating device according to any one of claims 3 to 5, wherein
a tip of the volume adjustment part inserted into the expanded space is provided with a resistance portion formed such that the cross sectional area of at least a portion thereof in the width direction is substantially the same size as the cross sectional area of the expanded space, and the resistance portion is moved by the drive unit inside the expanded space in reciprocating motion in the width direction.

7. The coating device according to claim 6, wherein
the resistance portion is formed such that the cross sectional area in the width direction becomes smaller toward the center of the coating unit in the width direction.

8. The coating device according to claim 1 or 2, wherein
the coating flow path has a manifold that is long in the width direction, serving as a space for holding a coating liquid, and a slit that is wide in the width direction and connects the manifold and the discharge port, wherein the volume adjustment part is inserted into the manifold.
